# FASCICULE DE BREVET EUROPEEN

(11) **EP 3 931 064 B1**
(45) Date de publication et mention de la délivrance du brevet: **18.10.2023**
(21) Numéro de dépôt: 20725796.5
(22) Date de dépôt: 28.02.2020
(51) Int. Cl.: B62B 5/04

(54) **SYSTÈME D'IMMOBILISATION D'UN ROBOT MÉDICAL**
SYSTEM ZUR IMMOBILISIERUNG EINES MEDIZINISCHEN ROBOTERS
SYSTEM FOR IMMOBILIZING A MEDICAL ROBOT

(30) Priorité: 01.03.2019 FR 1902154
(43) Date de publication de la demande: 05.01.2022
(73) Titulaire: Quantum Surgical, 34000 Montpellier (FR)
(72) Inventeur: NAHUM, Bertin, 34170 Castelnau-le-Lez (FR); BADANO, Fernand, 69006 Lyon (FR); BLONDEL, Lucien, 34070 Montpellier (FR); PESCHER, Estelle, 34000 Montpellier (FR)
(74) Mandataire: Ipside
(86) Numéro de dépôt international: PCT/FR2020/050404
(87) Numéro de publication internationale: WO 2020/178511

(56) Documents cités:
- EP-A1- 0 666 209
- EP-A1- 1 621 171
- CN-A- 105 284 629
- CN-A- 107 753 108
- FR-A1- 3 043 970
- GB-A- 2 440 802
- US-A1- 2008 218 948
- US-A1- 2010 137 880
- US-A1- 2018 132 966

## Description

### Domaine technique de l'invention

La présente invention appartient au domaine des équipements de dispositifs mobiles, par exemple des chariots ou tout autres véhicules. Notamment, l'invention concerne un système d'immobilisation d'un dispositif mobile.

L'invention est particulièrement adaptée à immobiliser un robot d'assistance médicale.

### Technique antérieure

Les dispositifs mobiles, tels que les chariots ou autres véhicules destinés à porter une charge, présentent généralement des moyens d'immobilisation adaptés à les immobiliser.

Des moyens d'immobilisation connus consistent en un patin pouvant prendre appui contre une roue du dispositif de sorte à appliquer une force de friction sur la roue d'intensité suffisante pour interdire sa rotation.

Toutefois, pour certaines applications, par exemple dans le domaine des robots d'assistance médicale dans lequel l'immobilisation du dispositif mobile revêt une importance particulière, ce type de moyens d'immobilisation n'est pas satisfaisant.

En effet, les dispositifs robotisés d'assistance médicale sont typiquement utilisés pour améliorer la précision du geste de l'opérateur et/ou pour pratiquer une intervention directement sur un patient par l'intermédiaire d'un bras robotisé portant un instrument médical. Il est donc indispensable pour la sécurité du patient que, lors de l'intervention, le dispositif mobile soit immobilisé et stabilisé de manière efficace, tout mouvement indésiré dudit dispositif risquant de provoquer un déplacement du bras robotisé et par extension, de l'instrument médical qu'il porte.

Le document FR3043970 décrit un dispositif robotisé d'assistance médicale muni de roulettes pouvant être immobilisées via des patins d'appui destinés à être entraînés en pivotement par un mécanisme reliant lesdits patins à un levier actionné manuellement par un opérateur.

Ces moyens d'immobilisation présentent notamment l'inconvénient que leur efficacité dépend directement de l'intensité des frottements des patins d'appui sur le sol. Cette intensité est susceptible de varier fortement selon la nature des matériaux des patins et du sol. L'immobilisation du dispositif mobile peut donc ne pas être assurée de manière suffisante.

En outre, le déploiement des moyens d'immobilisation est entièrement dépendant d'un l'opérateur. Il existe donc un risque d'oubli de l'actionnement de ces moyens d'immobilisation par l'opérateur avant une intervention.

Un autre inconvénient des moyens d'immobilisation du dispositif robotisé d'assistance médicale décrits dans le document FR3043970 réside dans le fait qu'ils nécessitent un sol présentant une planéité parfaite pour fonctionner de manière optimale. Le mécanisme reliant les patins au levier interdit tout mouvement relatif d'un patin par rapport à un autre de sorte qu'ils ne s'appuient pas contre le sol, ou ne s'appuient pas tous sur le sol avec la même force d'appui, si le sol présente des défauts de planéité.

Les documents CN105284629A, EP0666209A1 et GB2440802 décrivent également un état de la technique pertinent.

### Présentation de l'invention

La présente invention est définie par la revendication indépendante 1 jointe. Des modes particuliers de réalisation sont définis par les revendications dépendantes jointes. La présente invention a pour objectif de palier les inconvénients précités en proposant un système d'immobilisation d'un dispositif mobile supporté par des roues, par exemple d'un robot d'assistance médicale. Le système d'immobilisation comprend au moins trois pieds mobiles en coulissement dans des guides respectifs destinés à être fixés à un châssis du dispositif mobile, un mécanisme de tringlerie reliant les pieds entre eux et étant destiné à être fixé audit châssis du dispositif mobile, et un actionneur pouvant solliciter le mécanisme de tringlerie pour déplacer les pieds en coulissement entre une position d'appui contre le sol, dans laquelle le système d'immobilisation est apte à immobiliser le dispositif mobile, et une position de retrait, dans laquelle le système d'immobilisation est apte à libérer la mobilité du dispositif mobile.

Autrement dit, le mécanisme de tringlerie est agencé de sorte à entraîner les pieds en coulissement dans les guides, entre leurs positions d'appui et de retrait, lorsqu'il est sollicité par l'actionneur.

Ces caractéristiques permettent une activation et une désactivation successives aisées du système, c'est-à-dire une immobilisation et une libération de la mobilité du dispositif mobile de façon simple et rapide.

Dans des modes particuliers de réalisation, l'invention répond en outre aux caractéristiques suivantes, mises en oeuvre séparément ou en chacune de leurs combinaisons techniquement opérantes.

Dans des modes particuliers de réalisation de l'invention, le système d'immobilisation comprend au moins un organe élastique sollicité lorsque les pieds sont en position d'appui. Ledit au moins un organe élastique est dimensionné de sorte à supporter une fraction prédéterminée du poids du dispositif mobile lorsqu'il est sollicité.

Autrement dit, l'organe élastique est configuré pour être sollicité de sorte à supporter seulement une fraction prédéterminée du poids total du dispositif mobile lorsque les pieds sont en position d'appui.

Une telle fraction est représentative d'une partie seulement du poids total du dispositif mobile. De préférence, la fraction prédéterminée est comprise entre 30 et 75% du poids total du dispositif mobile. De préférence encore, la fraction prédéterminée est comprise entre 45 et 60% du poids total du dispositif mobile. À titre d'exemple, pour un dispositif mobile d'environ 150 kg, la fraction prédéterminée sera d'environ 80kg.

De la sorte, le poids du dispositif mobile est partiellement supporté par le système d'immobilisation lorsque ledit dispositif mobile est immobilisé.

Cette caractéristique participe à garantir la stabilité du dispositif mobile lorsqu'il est immobilisé. En outre, dans le cas où l'un des pieds serait endommagé, le dispositif mobile serait toujours maintenu par ses roues qui restent constamment au contact du sol, ce qui permet d'assurer la stabilité dudit dispositif en cas de défaillance.

Selon l'invention, le système d'immobilisation comprend au moins un capteur configuré pour connaître la position des pieds, le ou lesdits capteurs étant reliés à une unité de contrôle configurée de sorte à piloter l'actionneur en fonction de cette information.

Ainsi, le système d'immobilisation est automatisé.

Une telle caractéristique permet avantageusement d'éviter tout risque d'oubli d'actionnement du système d'immobilisation par l'opérateur.

Dans des modes particuliers de réalisation de l'invention, le mécanisme de tringlerie comporte au moins trois jeux de bielles articulées entre elles, chaque jeu de bielles étant configuré pour relier un pied avec le châssis du dispositif mobile. Le mécanisme de tringlerie comporte en outre au moins une tringle rigidement liée à au moins une traverse, lesdites tringle et traverse reliant les jeux de bielles et l'actionneur, une sollicitation de l'actionneur provoquant la rotation des bielles de chaque jeu de bielles, l'une par rapport à l'autre, et le coulissement des pieds dans les guides.

Autrement dit, chaque jeu de bielles est configuré de sorte que lorsque ses bielles sont entraînées en pivotement l'une par rapport à l'autre, il provoque le déplacement en coulissement du pied auquel il est relié.

Les tringle et traverse relient l'actionneur aux jeux de bielles de sorte qu'à chaque sollicitation de l'actionneur, lesdites tringle et traverse provoquent le pivotement des bielles de chaque jeu de bielles et ainsi, le coulissement des pieds dans les guides.

Les termes « jeu de bielles » définissent ici un ensemble de deux bielles articulées l'une à l'autre.

Dans des modes particuliers de réalisation de l'invention, chacune des extrémités respectives de la tringle et de la traverse est reliée à un jeu de bielles par une liaison pivot, dont l'axe de rotation est coaxial à l'axe de rotation des bielles dudit jeu de bielles l'une par rapport à l'autre.

Ainsi les efforts sont répartis sur chaque bielle du jeu de bielle de manière uniforme lors de chaque sollicitation de l'actionneur.

Dans des modes particuliers de réalisation de l'invention, l'actionneur est un vérin électrique.

Grâce à cette caractéristique, l'actionneur est irréversible. En outre, un tel actionneur présente un déplacement d'une grande précision. Un vérin électrique présente enfin l'avantage de nécessiter seulement une alimentation électrique pour son fonctionnement.

Dans des modes particuliers de réalisation de l'invention, le système d'immobilisation comprend un organe de débrayage de l'actionneur adapté à occuper :
- un état d'accouplement dans lequel il assure une liaison mécanique entre le châssis du dispositif mobile et le mécanisme de tringlerie par l'intermédiaire de l'actionneur ; ceci de sorte que ledit actionneur puisse appliquer des efforts mécaniques sur le mécanisme de tringlerie et
- un état débrayé dans lequel il rompt ladite liaison mécanique ; ceci de sorte qu'aucun effort mécanique ne puisse être transmis par l'actionneur sur le mécanisme de tringlerie.
   Ainsi, selon que l'organe de débrayage occupe l'état d'accouplement ou l'état débrayé, l'actionneur peut agir, ou non, sur les pieds pour les entraîner entre leurs positions de retrait et d'appui.

Cette caractéristique est particulièrement avantageuse lorsque le système d'immobilisation doit être utilisé alors que l'actionneur n'est pas en état de fonctionnement, par exemple s'il présente un disfonctionnement ou s'il n'est plus alimenté en énergie.

Dans des modes de réalisation de l'invention, le système d'immobilisation comprend un organe de rappel élastique sollicitant le mécanisme de tringlerie pour entraîner les pieds dans leur position de retrait.

Autrement dit, les pieds sont sollicités vers leur position de retrait par un organe élastique agissant sur le mécanisme de tringlerie, et plus particulièrement sur la tringle et la traverse.

Ainsi, lorsque l'organe de débrayage occupe l'état débrayé, l'organe de rappel élastique sollicite un rappel systématique des pieds dans leur position de retrait.

Cette caractéristique est particulièrement avantageuse lorsque l'actionneur est non réversible. En effet, le système d'immobilisation peut être désactivé manuellement, ce qui le rend indépendant d'une alimentation en énergie, par exemple électrique, pneumatique ou hydraulique, en cas de défaillance.

Dans des modes particuliers de réalisation de l'invention, les pieds comportent une partie suspendue et une partie d'appui en relation de coulissement l'une avec l'autre, lesdites parties suspendue et d'appui étant sollicitées en écartement l'une de l'autre par un organe élastique.

Grâce à ces caractéristiques, chaque pied est individuellement adapté à compenser localement d'éventuels défauts de planéité du sol, c'est-à-dire des creux et bosses, de sorte que le châssis du dispositif soit supporté de façon sensiblement horizontale.

Préférentiellement, la partie d'appui de chaque pied est prévue pour coulisser dans le guide, et la partie suspendue est prévue pour coulisser dans la partie d'appui.

Ces caractéristiques permettent également, grâce à l'organe élastique, de pouvoir ne supporter qu'une partie, et non la totalité, du poids du dispositif mobile, de sorte que même si un pied est endommagé, le dispositif mobile restera stable, dans la mesure où il est supporté par ses roues.

Dans des modes particuliers de réalisation de l'invention, chaque pied comprend au moins une butée de fin de course du coulissement des parties suspendue et d'appui l'une par rapport à l'autre, formée par une goupille fixée à l'une desdites parties suspendue ou d'appui engagée à travers une lumière réalisée dans l'autre partie suspendue ou d'appui.

Dans des modes particuliers de réalisation de l'invention, chaque pied comprend un organe de mesure des défauts locaux de planéité du sol, adapté à déterminer s'il existe un défaut local de planéité du sol en regard dudit pied et à déterminer la dimension de ce défaut local, ledit organe de mesure étant configuré pour transmettre à l'unité de contrôle :
- une consigne autorisant le pilotage de l'actionneur lorsque la valeur de la dimension du défaut local, dite « valeur mesurée » est comprise dans un intervalle de tolérance prédéfini et
- une consigne interdisant le pilotage de l'actionneur lorsque la valeur mesurée est en dehors de l'intervalle de tolérance prédéfini.

Ainsi, grâce à cette caractéristique, la stabilité du dispositif mobile est assurée lors de son immobilisation.

Par exemple, un tel organe de mesure peut être un capteur à ultrasons fixé dans l'embase de chaque pied et dirigé de sorte à mesurer la distance entre ladite embase et la surface du sol à laquelle elle fait face. Cette distance mesurée est ensuite comparée à une distance théorique du sol prédéfinie afin de déterminer l'existence et la dimension d'un éventuel défaut de planéité du sol. La distance théorique du sol est la distance entre l'embase du pied en position de retrait et un plan tangent à au moins trois roues du dispositif mobile.

Dans des modes particuliers de réalisation de l'invention, chaque pied comprend un organe de sécurité communiquant à l'unité de contrôle des informations représentatives d'une valeur de déplacement du pied lorsque les pieds sont en positon d'appui. La valeur de déplacement dépend notamment du type de capteur utilisé et de son agencement dans le pied.

L'unité de contrôle déduit sur la base de ces informations, une valeur dite « valeur de contrôle » représentative de la dimension d'un défaut local de planéité du sol compensé par ledit pied. Ladite unité de contrôle est configurée pour piloter l'actionneur pour entraîner les pieds en position de retrait et transmettre un signal d'alerte au dispositif mobile, si la valeur de contrôle n'est pas sensiblement identique à la valeur mesurée.

Les termes « sensiblement identique » signifient qu'il est tenu compte d'un faible intervalle de tolérance correspondant à une prise en compte des jeux mécaniques et de la précision du capteur utilisé.

Cette caractéristique ajoute un niveau supplémentaire de sécurité dans la mise en oeuvre du système d'immobilisation.

Dans des modes particuliers de réalisation de l'invention, chaque pied comprend un capteur d'efforts relié à l'unité de contrôle et configuré de sorte à déterminer le poids supporté par chacun desdits pieds lorsqu'ils sont en position d'appui, l'unité de contrôle étant configurée de sorte à émettre un signal d'alerte lorsque le poids supporté par un pied est inférieur à une valeur cible.

Ces caractéristiques permettent de déterminer si le dispositif mobile n'est pas suffisamment stable lorsqu'il est immobilisé, par exemple parce qu'un des pieds se trouve au-dessus d'un défaut local de planéité trop important pour pouvoir être compensé, ou parce que l'organe élastique est endommagé.

Selon un autre aspect, la présente invention concerne un dispositif mobile, notamment un robot d'assistance médicale, caractérisé en ce qu'il comprend un châssis auquel est lié un système d'immobilisation tel que décrit précédemment, le châssis étant supporté à distance du sol par au moins trois roues.

### Brève description des figures

L'invention sera mieux comprise à la lecture de la description suivante, donnée à titre d'exemple nullement limitatif, et faite en se référant aux figures qui représentent :
[Fig. 1] une vue en perspective du système d'immobilisation d'un dispositif mobile fixé au châssis du dispositif mobile représenté en traits discontinus ;
[Fig. 2] une vue de côté d'un système d'immobilisation selon la figure 1, les pied étant en position d'appui ;
[Fig. 3] une vue de côté d'un système d'immobilisation selon la figure 1, les pieds étant en position de retrait et l'actionneur étant en désolidarisé du châssis ;
[Fig. 4] une vue schématique de détail d'un organe de débrayage de l'actionneur ;
[Fig. 5] une vue en coupe d'un pied d'un système d'immobilisation selon la figure 1, le pied étant en position d'appui et compensant un défaut local de planéité du sol ;
[Fig. 6] une vue en coupe d'un pied d'un système d'immobilisation selon la figure 1, le pied étant en déplacement vers une position de retrait.

Dans ces figures, des références numériques identiques d'une figure à l'autre désignent des éléments identiques ou analogues. Par ailleurs, pour des raisons de clarté, les dessins ne sont pas à l'échelle, sauf mention contraire.

### Description des modes de réalisation

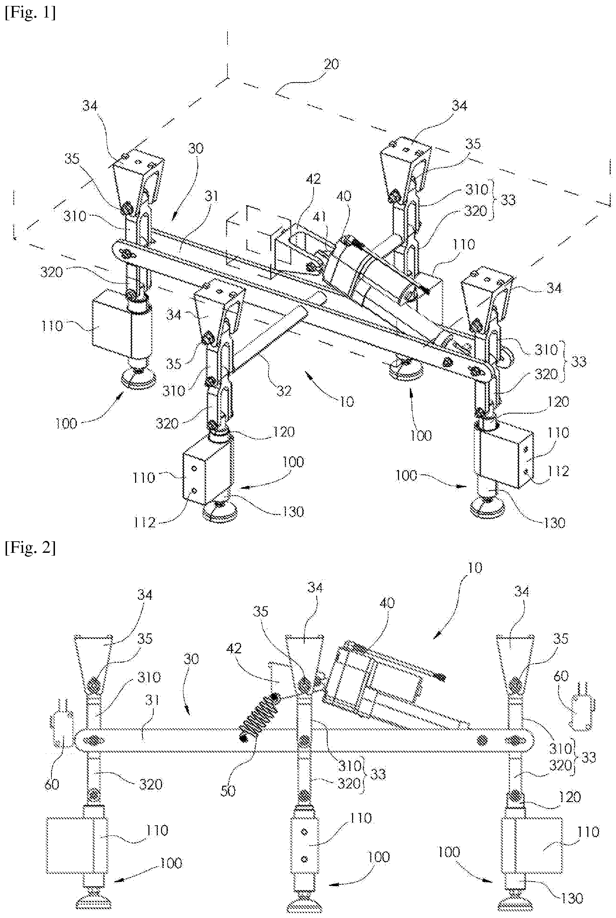

La présente invention concerne un système d'immobilisation 10 d'un dispositif mobile 20 tel que le représente la vue en perspective de la figure 1 dans un exemple de réalisation. Sur la figure 1, le dispositif mobile 20 est en partie représenté schématiquement en traits discontinus.

L'invention trouve préférentiellement son application dans un cadre dans lequel le dispositif mobile 20 est un robot d'assistance médicale.

Elle est par ailleurs particulièrement adaptée à immobiliser ledit robot d'assistance médicale lorsqu'il occupe une position optimale par rapport à une position d'un patient pour la réalisation d'une intervention médicale et à libérer la mobilité dudit robot lorsque l'intervention est terminée.

Le système d'immobilisation 10 est destiné à être fixé au châssis du dispositif mobile 20 supporté par au moins trois roues (non représentées), préférentiellement quatre.

Le système d'immobilisation 10 est configuré pour occuper un état dans lequel il immobilise le dispositif mobile 20 en supportant seulement une partie de son poids, tout en garantissant sa stabilisation, et un état dans lequel il autorise les déplacements dudit dispositif.

Le système d'immobilisation 10 comprend des pieds 100 destinés à être reliés au châssis par le biais d'un mécanisme de tringlerie 30.

Un actionneur 40 est relié au mécanisme de tringlerie 30 de sorte à transmettre des efforts aux pieds 100 pour provoquer leur déplacement entre une position d'appui au sol et une position de retrait, à distance du sol.

Lorsque les pieds 100 occupent la position d'appui au sol, ils sont destinés à supporter une fraction prédéterminée du poids du dispositif mobile 20, de sorte à l'immobiliser, et lorsqu'ils occupent la position de retrait, ils sont destinés à libérer la mobilité du dispositif mobile 20.

Avantageusement, lors de leur déplacement, les pieds 100 coulissent dans des guides 110 prévus pour être fixés au châssis du dispositif mobile 20. Ces guides 110 permettent de maintenir des pieds 100 et d'assurer qu'ils ne disposent que d'un degré de liberté en translation.

Autrement dit, le mécanisme de tringlerie 30 est configuré pour transformer le mouvement de l'actionneur 40 en un mouvement de translation des pieds 100.

Comme le montre la figure 1, le mécanisme de tringlerie 30 comporte une tringle 31 s'étendant entre deux extrémités longitudinales à laquelle est fixée une traverse 32 s'étendant également entre deux extrémités longitudinales.

Préférentiellement, la tringle 31 est formée par deux bras parallèles, par exemple réalisés par des profilés, les deux bras parallèles étant agencés de façon symétrique et à distance l'un par rapport à l'autre, comme l'illustre la figure 1.

Chacune des extrémités longitudinales de la tringle 31 et de la traverse 32 est reliée à un pied 100 par un ensemble de transmission de mouvement. Les ensembles de transmission de mouvement sont configurés pour transformer tout mouvement de la tringle 31 et de la traverse 32 en mouvement de translation des pieds 100.

Pour des raisons d'équilibrage des efforts exercés sur les pieds 100, la traverse 32 est préférentiellement fixée à la tringle 31 à équidistance entre les deux extrémités longitudinales de ladite traverse 32, et de manière analogue, à équidistance entre les deux extrémités longitudinales de la tringle 31.

Dans l'exemple de réalisation de l'invention représenté sur les figures 1 à 6, le système d'immobilisation 10 comprend quatre pieds 100, mais dans d'autres exemples, le système peut comprendre au moins trois pieds 100.

Chaque ensemble de transmission de mouvement comprend un jeu de bielles 33 articulé d'une part au pied 100, et d'autre part, au châssis du dispositif mobile 20 par un organe de fixation.

Plus particulièrement, l'organe de fixation relie une bielle du jeu de bielles 33 avec le châssis du dispositif mobile 20, en autorisant préférentiellement un degré de liberté en rotation. Par exemple, comme le représente la figure 1, l'organe de fixation est formé par une chape 34, rigidement fixée au châssis et comprenant une broche 35 par laquelle ladite chape 34 est fixée à une bielle de manière libre en rotation.

Chaque jeu de bielles 33 présente deux bielles s'étendant entre une tête de bielle et un pied de bielle, les bielles étant respectivement appelées « bielle supérieure » 310 et « bielle inférieure » 320 dans la suite du texte.

Il y a lieu de noter que dans la présente description, le terme « vertical » est défini selon une direction qui est parallèle à la direction de la pesanteur, et que les termes relatifs « supérieur » et « inférieur » sont définis le long d'une droite verticale, et sont relatifs à la position d'un système d'immobilisation 10 selon l'invention tel qu'illustré sur la figure 1.

Les bielles supérieure et inférieure 310 et 320 d'un jeu de bielles 33 sont articulées l'une à l'autre, le pied de la bielle supérieure 310 étant relié à la tête de la bielle inférieure 320 par un pivot dit « pivot de jeu de bielles ».

Chaque jeu de bielles 33 est agencé de sorte que la bielle supérieure 310 est reliée à la broche 35 de la chape 34 par sa tête et que le pied de la bielle inférieure 320 est articulé à une extrémité d'un pied 100.

Avantageusement, chacune des extrémités longitudinales de la tringle 31 et de la traverse 32 est reliée à un jeu de bielles 33. Plus particulièrement, chaque extrémité longitudinale de la tringle 31 et de la traverse 32 est reliée à un jeu de bielles 33 par une liaison pivot dont l'axe de rotation est coaxial à l'axe du pivot de jeu de bielles.

Comme visible sur la figure 1, le pivot de jeu de bielles des jeux de bielles 33 reliés aux extrémités de la tringle 31 est agencé entre lesdits deux bras parallèles, ainsi que les bielles supérieure et inférieure 310 et 320 desdits jeux de bielles.

Dans l'exemple de réalisation de l'invention représenté sur la figure 1, l'actionneur 40 est relié d'une part à la tringle 31 et d'autre part au châssis, de sorte à entraîner la tringle 31 et la traverse 32 selon une translation circulaire autour des axes de rotation de la tête de bielle des bielles supérieures 310. Autrement dit, l'actionneur 40 est configuré pour entraîner la tringle 31 et la traverse 32 à transmettre un mouvement de rotation à chaque bielle supérieure 310, par sa tête, autour de la broche 35 de la chape 34.

Alternativement, au lieu d'être relié à la tringle 31, l'actionneur 40 peut être relié à la traverse 32.

Une telle transmission de mouvement a pour effet d'entraîner la rotation de la bielle inférieure 320 autour du pivot de jeu de bielles 33, de telle sorte que les bielles supérieure et inférieure 310 et 320 peuvent être inclinées ou alignées l'une par rapport à l'autre.

Cela provoque, par voie de conséquence, selon le sens de la rotation de la bielle inférieure 320, la poussée ou la traction de chaque pied 100 à travers le guide 110 dans lequel il est libre de coulisser.

Préférentiellement, les pieds 100 et les guides 110 sont configurés de sorte que lesdits pieds 100 coulissent selon un axe sensiblement vertical, de sorte que la résultante de la force générée par le poids du dispositif mobile 20 à supporter, appliquée par chaque pied 100 contre le sol, est uniquement verticale. Cette caractéristique permet de garantir la stabilité du dispositif mobile 20 lors de son immobilisation et d'éliminer tout risque de glissement des pieds 100.

Un avantage de la présente invention réside dans le fait que, lorsque les pieds 100 sont en position d'appui, les bielles supérieure et inférieure 310 et 320 de chaque jeu de bielles 33 s'étendent dans le prolongement du pied 100 auquel elles sont associées, comme le montre la figure 1, la résultante de la force générée par le poids du dispositif mobile 20 à supporter appliquée sur chaque pied 100 est uniquement verticale. En plus de réduire l'intensité des contraintes mécaniques auxquelles est soumis l'actionneur 40, cette caractéristique permet au système d'immobilisation 10 d'assurer la stabilité du dispositif mobile 20 de manière importante lorsqu'il est immobilisé, dans la mesure où tout risque de glissement est écarté.

Préférentiellement, l'actionneur 40 est agencé par rapport à la tringle 31 de sorte que la résultante des forces qu'il applique sur ladite tringle 31 soit sensiblement horizontale.

Avantageusement, dans le présent exemple de réalisation de l'invention, l'actionneur 40 est un vérin, préférentiellement un vérin électrique.

Le vérin comprend une tige agencée en translation dans un corps de vérin. Dans le présent exemple de réalisation, la tige est fixée de manière mobile en rotation autour d'une broche dite « broche support » 41 coopérant avec une chape, dite « chape support » 42 destinée à être rigidement fixée au châssis. Le corps du vérin est fixé à un pivot agencé transversalement entre les deux bras parallèles de la tringle 31 de sorte à présenter une mobilité en rotation par rapport à ladite tringle 31.

Toutefois, la tige et le corps de vérin peuvent être indifféremment fixés à la broche support 41 ou à la tringle 31.

Préférentiellement, pour des raisons de résistance mécanique, la chape support 42 est fixée au châssis de sorte à reposer en appui contre une surface verticale dudit châssis. En effet, grâce à cette caractéristique, les éléments de fixation de la chape support 42 au châssis seront soumis à des efforts de traction et de compression et non à des efforts de cisaillements.

Avantageusement, le système d'immobilisation 10 peut comprendre un organe de débrayage 36 de l'actionneur 40 adapté à occuper :
- un état d'accouplement dans lequel il assure une liaison mécanique entre le châssis du dispositif mobile 20 et le mécanisme de tringlerie 30 par l'intermédiaire de l'actionneur 40 de sorte que ledit actionneur 40 puisse appliquer des efforts mécaniques sur le mécanisme de tringlerie 30 et
- un état de débrayage dans lequel il rompt ladite liaison mécanique de sorte qu'aucun effort mécanique ne puisse être transmis par l'actionneur 40 au mécanisme de tringlerie 30.
   Plus particulièrement, l'organe de débrayage 36 est apte à désolidariser l'actionneur 40 du châssis et/ou du mécanisme de tringlerie 30.

Cette caractéristique est particulièrement avantageuse lorsque le système d'immobilisation 10 doit être utilisé alors que l'actionneur 40 n'est pas en état de fonctionnement, par exemple s'il présente un disfonctionnement ou s'il n'est plus alimenté en énergie.

Préférentiellement, l'organe de débrayage 36 est formé par une tige 360 dont l'une des extrémités prend la forme une goupille destinée à être engagée dans la chape support 42 lorsque l'organe de débrayage 36 occupe l'état d'accouplement, pour assurer une liaison mécanique entre le châssis du dispositif mobile 20 et l'actionneur 40, de manière analogue et alternativement à la broche support 41 précédemment décrite.

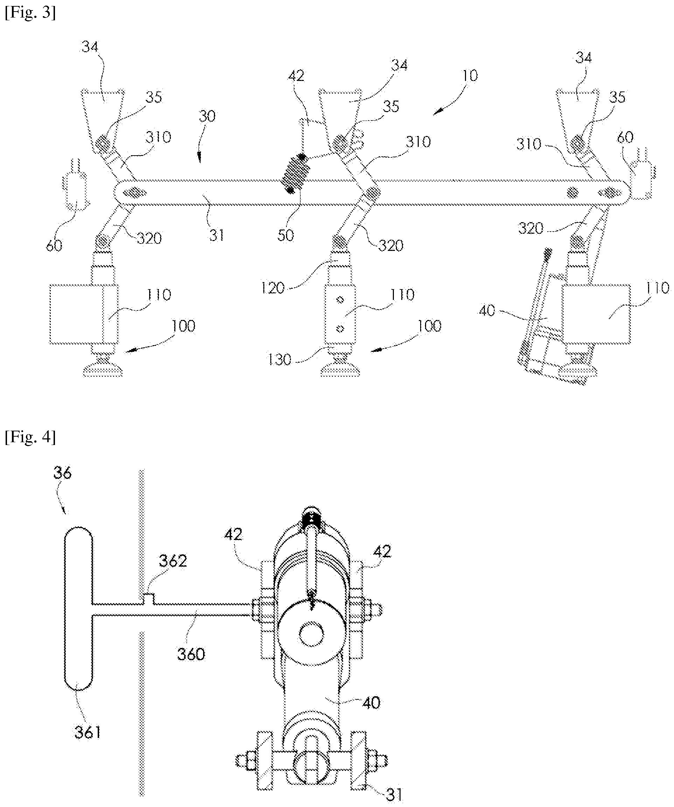

L'autre extrémité de la tige 360 comporte un élément de manoeuvre 361, par exemple une poignée, une manette ou un volant, tel que l'illustre schématiquement la figure 4, destiné à être manipulé par un opérateur pour changer l'état de l'organe de débrayage 36.

La tige 360 s'étend à travers une ouverture d'une pièce support destinée à être fixée au châssis du dispositif mobile 20. Avantageusement, la pièce support est prévue pour guider en translation et en rotation la tige 360 selon son axe longitudinal.

La tige 360 comporte une butée radiale 362 reposant contre la pièce support lorsque l'organe de débrayage 36 occupe l'état d'accouplement, de sorte à maintenir la goupille en engagement dans la chape support 42. Cette butée radiale 362 permet de garantir le maintien de l'organe de débrayage 36 en état d'accouplement et d'éviter tout changement d'état accidentel.

Plus particulièrement, l'ouverture de la pièce support comprend un dégagement radial de section de même forme que celle de la section de la butée radiale 362 et de dimensions au moins égales à celles de la section de ladite butée radiale 362. Ceci de sorte que, lorsque la butée radiale 362 est en vis-à-vis du dégagement, elle peut coulisser à travers ledit dégagement, autorisant par voie de conséquence, le coulissement de la tige 360 selon son axe longitudinal.

Une telle caractéristique permet, en tirant la tige 360 par l'intermédiaire de l'élément de manoeuvre 361, de dégager la goupille de la chape support 42 et ainsi d'entrainer l'organe de débrayage 36 dans l'état de débrayage.

En résumé, pour entraîner l'organe de débrayage 36 de son état d'accouplement à son état débrayé, un opérateur doit pivoter ledit organe jusqu'à ce que la butée radiale 362 soit disposée en regard du dégagement, puis tirer la tige 360 jusqu'à ce que la goupille soit retirée de la chape support 42.

A l'inverse, pour entraîner l'organe de débrayage 36 de son état débrayé à son état d'accouplement, l'opérateur doit positionner l'actionneur 40, en particulier l'extrémité libre de la tige du vérin, en regard de la chape support 42 et pousser la tige 360 selon son axe longitudinal de sorte à engager la goupille à la fois dans la chape support 42 et dans l'extrémité libre de la tige du vérin, puis pivoter ladite tige 360 de sorte à appliquer la butée radiale 362 contre la pièce support.

Les figures 2 et 3 illustrent un organe de rappel élastique 50 agencé de sorte à solliciter le mécanisme de tringlerie 30 pour entraîner les pieds 100 dans leur position de retrait. Plus précisément, l'organe de rappel élastique 50 peut être formé par un ressort hélicoïdal travaillant en traction et fixé d'une part à la tringle 31 et d'autre part au châssis du dispositif mobile 20, par exemple, par l'intermédiaire de la chape support 42.

Ainsi, lorsque l'actionneur 40 est désolidarisé du châssis par le retrait de l'organe de débrayage 36, les pieds 100 sont entraînés systématiquement dans leur position de retrait par l'organe de rappel élastique 50.

Cette caractéristique est particulièrement avantageuse lorsque l'actionneur 40 n'est pas réversible.

Préférentiellement, le système d'immobilisation 10 comporte une unité de contrôle connectée à l'actionneur 40 de sorte à pouvoir le piloter, en particulier à déployer ou rétracter la tige du vérin, suivant des instructions fournies par un utilisateur ou si des consignes prédéfinies sont remplies.

Préférentiellement, dans le présent exemple de réalisation, l'unité de contrôle du dispositif d'immobilisation 10 est destinée à être connectée à une unité centrale de contrôle du dispositif mobile 20 et est prévue pour piloter l'actionneur 40 suivant des consignes fournies par celle-ci.

Plus particulièrement, l'unité centrale de contrôle du dispositif mobile 20 est configurée pour transmettre une consigne d'immobilisation à l'unité de contrôle du système d'immobilisation 10 pour provoquer le pilotage de l'actionneur 40 de sorte à immobiliser ledit dispositif mobile 20, ou pour transmettre une consigne de libération à l'unité de contrôle du système d'immobilisation 10 pour provoquer le pilotage de l'actionneur 40 de sorte à libérer la mobilité dudit dispositif mobile 20, en fonction des besoins.

Avantageusement, l'unité de contrôle du système d'immobilisation 10 peut être asservie par l'unité centrale de contrôle du dispositif mobile 20 de sorte que lorsque le dispositif mobile 20 est positionné dans une zone prédéterminée conformément à un plan d'intervention, ladite unité centrale de contrôle, sur commande d'un opérateur ou automatiquement, transmet à l'unité de contrôle une consigne de pilotage de l'actionneur 40 pour immobiliser le dispositif mobile 20. Inversement, lorsque l'immobilisation du dispositif mobile n'est plus souhaitée, l'unité centrale de contrôle, sur commande d'un opérateur ou automatiquement, transmet à l'unité de contrôle une consigne de pilotage de l'actionneur 40 pour libérer la mobilité du dispositif mobile 20. Le dispositif mobile 20 peut alors être déplacé.

Le système d'immobilisation 10 comprend un ou des capteurs connectés à l'unité de contrôle et aptes à déterminer la position des pieds 100. L'unité de contrôle est configurée de sorte à piloter l'actionneur 40 pour interrompre le déplacement des pieds 100 lorsqu'un capteur a déterminé que les pieds 100 sont en position d'appui ou en position de retrait.

Les capteurs peuvent être sensibles au déplacement de toute pièce du mécanisme de tringlerie 30. Plus particulièrement, comme le montrent les figures 2 et 3, ces capteurs peuvent être des capteurs de fins de course 60 agencés de sorte à être sollicités lorsque la tringle 31, la traverse 32 ou l'une des bielles supérieure ou inférieure 310 ou 320, occupe l'une de deux positions extrêmes correspondant respectivement à des positions dans lesquelles les pieds 100 sont en position de retrait et en position d'appui.

Dans ce cas, les capteurs de fin de course 60 sont des capteurs de position mécaniques, magnétiques, électriques, pneumatiques ou optiques.

Dans l'exemple de réalisation représenté par les figures 2 et 3, les capteurs de fin de course 60 sont agencés sur le châssis du dispositif mobile 20, de part et d'autre de la tringle 31, sensiblement dans le prolongement de sa longueur, de sorte que lorsque ladite tringle 31 occupe l'une de ses positions extrêmes, elle sollicite lesdits capteurs par chacune de ses extrémités longitudinales.

Alternativement, le système d'immobilisation 10 comporte un capteur sensible au déplacement de l'actionneur 40. Plus particulièrement, ce capteur peut être un potentiomètre coopérant avec l'actionneur 40 de sorte à déterminer sa course de manière continue. Le potentiomètre est donc adapté à déterminer lorsque l'actionneur 40 a entraîné la tringle 31 dans une de ses deux positions extrêmes et par conséquent, la position des pieds 100.

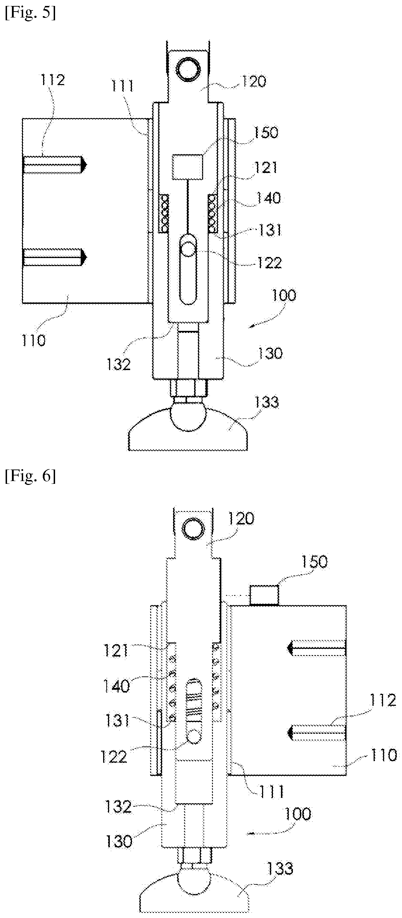

Les figures 5 et 6 représentent une vue en coupe d'un des pieds 100 du système d'immobilisation 10 respectivement dans une position de retrait et dans une position d'appui.

Chaque pied 100 comprend une partie suspendue 120 en relation de coulissement avec une partie d'appui 130, les parties étant sollicitées en écartement l'une de l'autre par un organe élastique 140.

Préférentiellement, la partie suspendue et la partie d'appui 130 sont mobiles, en translation relativement l'une à l'autre selon un axe vertical.

La partie suspendue 120 s'étend entre une extrémité supérieure et une extrémité inférieure. La partie suspendue 120 présente à son extrémité supérieure un pivot avec lequel elle est reliée au pied de la bielle inférieure 320.

Dans le présent exemple de réalisation, la partie suspendue 120 présente une section droite de forme circulaire et comprend, dans sa longueur, deux portions dont les diamètres sont différents de sorte à former un épaulement dit « premier épaulement » 121. Plus précisément, la partie suspendue 120 présente, sur un segment de sa longueur s'étendant jusqu'à son extrémité inférieure, une portion dite « portion inférieure » dont le diamètre est réduit.

Dans le présent exemple de réalisation, la partie d'appui 130 s'étend entre une extrémité supérieure et une extrémité inférieure et présente une forme tubulaire creuse, dont la section droite est circulaire. La partie d'appui 130 présente une ouverture à son extrémité supérieure, par laquelle est engagée en coulissement la partie suspendue 120.

Préférentiellement, la partie d'appui 130 comprend, dans sa longueur, deux portions dont les diamètres internes sont différents, de sorte à former un épaulement dit « second épaulement » 131. Plus précisément, la partie d'appui 130 présente, sur un segment de sa longueur s'étendant entre ses extrémités inférieure et supérieure, une portion dite « portion inférieure » dont le diamètre interne correspond sensiblement, aux jeux mécaniques près, au diamètre de la portion inférieure de la partie suspendue 120 de sorte que lesdites portions inférieures coopèrent en coulissement l'une avec l'autre.

Comme le montrent les figures 5 et 6, la partie suspendue 120 et la partie d'appui 130 sont configurées de sorte que les premier et second épaulements 121 et 131 sont en vis-à-vis et forment une chambre interne de forme annulaire autour de la portion inférieure de la partie suspendue 120.

Les figures 5 et 6 montrent que l'organe élastique 140 est agencé dans la chambre interne. L'organe élastique 140 est préférentiellement constitué par un ressort hélicoïdal travaillant en compression, enroulé autour de la portion de section réduite de la partie suspendue 120 et agencé en appui contre les premier et second épaulements 121 et 131.

La mobilité de la partie suspendue 120 par rapport à la partie d'appui 130 en combinaison avec l'organe élastique 140 permet avantageusement au système d'immobilisation 10 de ne supporter qu'une partie du poids du dispositif mobile 20 lorsqu'il est immobilisé.

À cet effet, chaque organe élastique 140 est dimensionné de sorte à pouvoir supporter une valeur cible du poids du dispositif mobile 20 lorsque le pied 100 est en position d'appui.

Par exemple, les pieds 100 étant au nombre de quatre, chaque organe élastique 140 est taré de sorte à supporter 25% de la fraction prédéterminée du poids du dispositif mobile 20 lorsque ce dernier est immobilisé. Il va de soi que, si le système d'immobilisation comporte trois pieds 100, la valeur cible correspond à 33% de la fraction prédéterminée du poids du dispositif mobile 20 lorsque ce dernier est immobilisé.

Ainsi, dans le cas où un pied est endommagé, le dispositif mobile 20 reste stable car il reste supporté par ses roues. Cette caractéristique participe donc à garantir la stabilité du dispositif mobile lorsqu'il est immobilisé.

En outre, grâce à la mobilité de la partie suspendue 120 relativement à la partie d'appui 130 et à l'organe élastique 140, chaque pied 100 compense localement d'éventuels défauts locaux de planéité du sol, de type creux ou bosse, de sorte que le châssis du dispositif mobile 20 soit supporté de façon sensiblement horizontale et que l'ensemble des pieds 100 soit en appui sur le sol malgré d'éventuels défauts locaux de planéité. La stabilité du dispositif mobile 20 immobilisé est donc assurée.

Autrement dit, la partie suspendue 120 étant plus ou moins engagée dans la partie d'appui 130 selon les éventuels défauts locaux de planéité du sol, les chapes sont systématiquement au même niveau par rapport au sol, de sorte que le dispositif mobile 20 est maintenu au même niveau.

La notion de « défauts locaux de planéité du sol » est ici entendue comme étant tout décalage de la surface du sol par rapport à un plan dans lequel sont inscrits les points ou zones d'appui des roues du dispositif mobile 20 sur le sol.

Chaque pied 100 est dimensionné de sorte que la dimension de la course maximale de la partie suspendue 120 dans la partie d'appui 130 permet de compenser le défaut de planéité du sol et de supporter une valeur cible correspondant à un pourcentage de la fraction prédéterminée du poids total du dispositif mobile lorsque les pieds sont en position d'appui. La dimension de la course maximale de la partie suspendue 120 dans la partie d'appui 130 est par exemple d'environ vingt millimètres lorsque le système d'immobilisation supporte 80kg d'un dispositif mobile de 150kg et compense un décalage maximal de cinq millimètres.

La course maximale est définie ici entre un état de compression maximal d'un pied 100 et un état d'extension maximal. De tels états sont occupés par un pied 100 lorsqu'il compense localement un défaut local de planéité du sol, respectivement une bosse et un creux. Les bosses et creux que chaque pied 100 peut compenser présentent, par exemple, un décalage de cinq millimètres par rapport à un plan dans lequel sont inscrits les points ou zones d'appui des roues du dispositif mobile 20 sur le sol.

Chaque pied 100 comprend une butée de fin de course en compression 132 formée, dans le présent exemple de réalisation, par une paroi de fond réalisée au niveau de l'extrémité inférieure de la partie d'appui 130 contre laquelle peut reposer l'extrémité inférieure de la partie suspendue 120 lorsque le pied 100 est en position d'appui et qu'un défaut local de planéité du sol est compensé, comme le montre la figure 5.

Chaque pied 100 comprend également une butée de fin de course en extension 122 formée, dans le présent exemple de réalisation, par une goupille fixée radialement à l'intérieur de la portion inférieure de la partie d'appui 130, comme le montre la figure 6. La goupille est engagée dans une lumière, par exemple de forme oblongue, s'étendant axialement dans la portion inférieure de la partie suspendue 120.

Comme le montrent les figures 5 et 6, l'extrémité inférieure de la partie d'appui 130 de chaque pied 100 présente une embase 133 prévue pour reposer contre le sol lorsque les pieds 100 occupent la position d'appui. L'embase 133 peut avantageusement être jointe à ladite extrémité inférieure par une liaison rotule pour s'adapter à d'éventuelles déformations locales du sol.

Les figures 5 et 6 montrent également, dans un exemple de réalisation de l'invention, que les guides 110 présentent un corps comportant un alésage traversant 111 et des moyens de fixation 112 au châssis. Préférentiellement, la partie d'appui 130 de chaque pied 100 est engagée dans l'alésage traversant 111 d'un guide 110, avec lequel elle coopère en coulissement par exemple, par l'intermédiaire de paliers lisses.

Préférentiellement, chaque pied 100 comprend un organe de mesure des défauts locaux de planéité du sol (non représenté sur les figures) adapté à déterminer s'il existe un défaut local de planéité du sol en regard dudit pied 100 et à déterminer la dimension de ce défaut local.

Plus particulièrement, les organes de mesure des défauts locaux de planéité du sol sont adaptés à déterminer s'il existe un décalage entre la position du sol en regard de chaque pied 100 par rapport à une position théorique du sol prédéfinie.

Par exemple, un tel organe de mesure peut être un capteur à ultrasons dont le fonctionnement en tant que tel est connu de l'homme du métier. Chaque capteur à ultrasons peut être fixé dans l'embase 133 d'un pied 100 et dirigé de sorte à mesurer la distance entre ladite embase 133 et la surface du sol à laquelle elle fait face.

La distance mesurée est comparée à la distance théorique du sol pour déterminer la valeur de la dimension du défaut local, dite « valeur mesurée ». La valeur mesurée est comparée à une valeur représentative d'une dimension maximale du défaut local de planéité du sol pouvant être corrigé par chaque pied du système d'immobilisation, cette dimension maximale correspond à une borne d'un intervalle de tolérance mentionné ci-après.

Un tel organe de mesure est destiné à être utilisé lorsque les pieds 100 sont en position de retrait.

L'organe de mesure est en outre configuré pour transmettre à l'unité de contrôle :
- une consigne autorisant le pilotage de l'actionneur 40 lorsque la valeur de la dimension du défaut local, dite « valeur mesurée » est comprise dans un intervalle de tolérance prédéfini et
- une consigne interdisant le pilotage de l'actionneur 40 lorsque la valeur mesurée est en dehors de l'intervalle de tolérance prédéfini.

De manière préférentielle, chaque pied 100 comprend un organe de sécurité 150 prévu pour vérifier si la distance du déplacement du pied 100 lorsque les pieds coulissent entre une position de retrait et une position d'appui correspond à la distance mesurée par l'organe de mesure entre l'embase 133 et la surface du sol lorsque les pieds sont en position de retrait.

Dans un exemple de réalisation de l'invention représenté sur la figure 6, l'organe de sécurité 150 est formé par un codeur optique linéaire. Le codeur optique linéaire comprend un module optique fixé sur le guide 110 et adapté à générer un faisceau lumineux (représenté par un trait discontinu) sur une règle (représentée par un trait épais) fixée sur la partie suspendue 120 en face dudit module optique.

Le codeur est ainsi apte à mesurer le déplacement de la partie suspendue 120 par rapport au guide 110 et est configuré pour transmettre cette information à l'unité de contrôle qui en déduit la valeur de la dimension du défaut local de planéité du sol compensé, dite « valeur de contrôle ». Dans une variante de réalisation, l'unité de contrôle peut être destinée à communiquer ladite valeur de contrôle à l'unité centrale de contrôle du dispositif mobile 20 qui en déduit la valeur de la dimension des défauts locaux de planéité du sol compensés.

Alternativement, l'organe de sécurité 150 est formé par un capteur de déplacement inductif, comme illustré sur la figure 5. Le capteur comporte un module de mesure intégré dans un volume interne formé dans la partie suspendue 120, au-dessus de la lumière, et une tige s'étendant axialement dans un alésage, depuis ledit module de mesure jusqu'à la goupille. Ainsi, la tige est adaptée à coulisser dans l'alésage lors du déplacement de la goupille dans la lumière.

Par conséquent, le capteur de déplacement inductif est apte à mesurer le déplacement de la partie suspendue 120 par rapport à la partie d'appui 130 et est configuré pour transmettre cette information à l'unité de contrôle qui en déduit la valeur de la dimension du défaut local de planéité du sol compensé, dite « valeur de contrôle ». Dans une variante de réalisation, l'unité de contrôle peut être destinée à communiquer ladite valeur de contrôle à l'unité centrale de contrôle du dispositif mobile 20 qui en déduit la valeur de la dimension du défaut local de planéité du sol compensé.

Si la valeur de la dimension du défaut local de planéité du sol réellement compensé est sensiblement identique à la valeur mesurée, le dispositif mobile 20 est immobilisé de façon stable.

A l'inverse, si la valeur de la dimension du défaut local de planéité du sol réellement compensé n'est pas sensiblement identique à la valeur mesurée, le dispositif mobile 20 est immobilisé de façon instable.

L'unité de contrôle du système d'immobilisation 10 est configurée de sorte que, lorsque la valeur de contrôle ne correspond pas, c'est-à-dire n'est pas sensiblement identique, à la valeur mesurée, il pilote l'actionneur 40 pour libérer la mobilité du dispositif mobile 20 et transmet un signal d'alerte à l'unité centrale de contrôle dudit dispositif mobile 20.

L'unité de contrôle du système d'immobilisation 10 est également configuré de sorte que, dans le cas contraire, si la valeur de contrôle correspond à la valeur mesurée, il autorise l'immobilisation du dispositif mobile 20.

Par ailleurs, l'unité de contrôle est configurée de sorte à piloter l'actionneur 40 pour libérer la mobilité du dispositif mobile 20 et de sorte à transmettre un signal d'alerte à l'unité centrale de contrôle du dispositif mobile 20, lorsque les butées de fin de course en extension et en compression d'un des pieds 100 sont sollicitées, c'est-à-dire lorsqu'un des pieds 100 est en compression maximale ou en extension maximale. Ces cas sont représentatifs d'un défaut local de planéité du sol trop important pour pouvoir être compensé, impliquant donc que le dispositif mobile 20 n'est pas immobilisé ou n'est pas immobilisé de façon stabilisée.

Plus particulièrement, par exemple, les butées de fin de course peuvent comprendre des capteurs de type interrupteur de position mécanique changeant d'état lorsque lesdites butées de fin de course sont sollicitées. L'unité de contrôle est connectée à ces capteurs afin de connaître leur état.

Alternativement, d'autres types de capteurs peuvent être utilisés, tel qu'un potentiomètre associé à la tige du vérin et connecté à l'unité de contrôle.

En outre, chaque pied 100 comprend un capteur d'efforts relié à l'unité de contrôle et configuré de sorte à déterminer le poids supporté par chacun desdits pieds 100 lorsqu'ils sont en position d'appui.

L'unité de contrôle du système d'immobilisation 10 est configurée de sorte que, lorsque le poids supporté par un pied 100 est inférieur à une valeur cible, il pilote l'actionneur 40 pour libérer la mobilité du dispositif mobile 20 et transmet un signal d'alerte à l'unité centrale de contrôle dudit dispositif mobile 20.

La valeur cible est égale à un pourcentage de la fraction prédéterminée du poids du dispositif fonction du nombre de pieds 100 du système d'immobilisation 10.

Par exemple, lorsque le système d'immobilisation 10 comporte quatre pieds 100, la valeur cible est égale à 25% de la fraction prédéterminée du poids du dispositif mobile 20 lorsque ce dernier est immobilisé. Il va de soi que, si le système d'immobilisation comporte trois pieds 100, la valeur cible correspond à 33% de la fraction prédéterminée du poids du dispositif mobile 20 lorsque ce dernier est immobilisé.

Ces caractéristiques permettent de déterminer si le dispositif mobile 20 n'est pas suffisamment stable lorsqu'il est immobilisé, par exemple parce qu'un des pieds 100 se trouve au-dessus d'un défaut local de planéité trop important pour pouvoir être compensé, ou parce que l'organe élastique 140 est endommagé.

De manière plus générale, il est à noter que les modes de mise en oeuvre et de réalisation de l'invention considérés ci-dessus ont été décrits à titre d'exemples non limitatifs et que d'autres variantes sont par conséquent envisageables dans la portée des revendications jointes.

Notamment, rien n'exclut dans d'autres types de réalisation, de considérer une disposition alternative du mécanisme de tringlerie 30, dans laquelle ledit mécanisme comprend une tringle 31 à chacune des extrémités de laquelle est fixée une traverse 32, les pieds 100 étant reliés aux extrémités des traverses 32. De façon plus générale, rien n'exclut d'autres types de dispositions du mécanisme de tringlerie 30, en particuliers des tringle(s) 31 et traverse(s) 32.

## Revendications

1. Système d'immobilisation (10) d'un dispositif mobile (20) comprenant :
- Au moins trois pieds (100) mobiles en coulissement dans des guides (110) respectifs, lesdits guides (110) étant destinés à être fixés à un châssis du dispositif mobile (20),
- Un mécanisme de tringlerie (30) reliant les pieds (100) entre eux et étant destiné à être fixé au châssis du dispositif mobile (20),
- Un actionneur (40) pouvant solliciter le mécanisme de tringlerie (30) pour déplacer les pieds (100) en coulissement entre une position d'appui contre le sol, dans laquelle le système d'immobilisation (10) est apte à immobiliser le dispositif mobile (20), et une position de retrait, dans laquelle le système d'immobilisation (10) est apte à libérer la mobilité du dispositif mobile (20), **caractérisé en ce que** le système d'immobilisation comprend au moins un capteur configuré pour connaître la position des pieds (100), le ou lesdits capteurs étant reliés à une unité de contrôle configurée de sorte à piloter l'actionneur (40) en fonction de cette information.

2. Système selon la revendication 1, comprenant au moins un organe élastique (140) sollicité lorsque les pieds (100) sont en position d'appui, ledit au moins un organe élastique étant dimensionné de sorte à supporter une fraction prédéterminée du poids total du dispositif mobile (20) lorsqu'il est sollicité.

3. Système selon l'une des revendications 1 à 2, dans lequel le mécanisme de tringlerie (30) comporte au moins trois jeux de bielles articulées entre elles, chaque jeu de bielles (33) étant configuré pour relier un pied (100) avec le châssis du dispositif mobile (20), le mécanisme de tringlerie (30) comporte en outre au moins une tringle (31) rigidement liée à au moins une traverse (32), lesdites tringle (31) et traverse (32) reliant les jeux de bielles et l'actionneur (40), une sollicitation de l'actionneur (40) provoquant la rotation des bielles de chaque jeu de bielles (33), l'une par rapport à l'autre, et le coulissement des pieds (100) dans les guides (110).

4. Système selon la revendication 3, dans lequel chacune des extrémités respectives de la tringle (31) et de la traverse (32) est reliée à un jeu de bielles (33) par une liaison pivot dont l'axe de rotation est coaxial à l'axe de rotation des bielles dudit jeu de bielles (33) l'une par rapport à l'autre.

5. Système selon l'une des revendications 1 à 4, dans lequel l'actionneur (40) est un vérin électrique.

6. Système selon l'une des revendications 1 à 5, comprenant un organe de débrayage (36) de l'actionneur (40) adapté à occuper :
- un état d'accouplement dans lequel il assure une liaison mécanique entre le châssis du dispositif mobile (20) et le mécanisme de tringlerie (30) par l'intermédiaire de l'actionneur (40), ledit actionneur (40) pouvant appliquer des efforts mécaniques sur le mécanisme de tringlerie (30) et
- un état débrayé dans lequel il rompt ladite liaison mécanique, aucun effort mécanique ne pouvant être transmis par l'actionneur (40) sur le mécanisme de tringlerie (30).

7. Système selon la revendication 6, comprenant un organe de rappel élastique (50) sollicitant le mécanisme de tringlerie (30) pour entraîner les pieds (100) dans leur position de retrait.

8. Système selon l'une des revendications 1 à 7, dans lequel les pieds (100) comportent une partie suspendue (120) et une partie d'appui (130) en relation de coulissement l'une avec l'autre, lesdites parties suspendue et d'appui (120, 130) étant sollicitées en écartement l'une de l'autre par un organe élastique (140).

9. Système selon la revendication 8, dans lequel chaque pied (100) comprend au moins une butée de fin de course du coulissement des parties suspendue et d'appui (120, 130) l'une par rapport à l'autre, formée par une goupille fixée à l'une desdites parties suspendue ou d'appui (120, 130) engagée à travers une lumière réalisée dans l'autre partie suspendue ou d'appui (120, 130).

10. Système selon la revendication 1, dans lequel chaque pied (100) comprend un organe de mesure des défauts locaux de planéité du sol, déterminant s'il existe un défaut local de planéité du sol en regard dudit pied (100) et la dimension de ce défaut local, ledit organe de mesure étant configuré pour transmettre à l'unité de contrôle :
- une consigne autorisant le pilotage de l'actionneur (40) lorsque la valeur de la dimension du défaut local, dite « valeur mesurée » est comprise dans un intervalle de tolérance prédéfini et
- une consigne interdisant le pilotage de l'actionneur (40) lorsque la valeur mesurée est en dehors de l'intervalle de tolérance prédéfini.

11. Système selon la revendication 10, dans lequel chaque pied (100) comprend un organe de sécurité (150) communiquant à l'unité de contrôle des informations représentatives d'une valeur de déplacement du pied (100) lorsque les pieds coulissent entre une position de retrait et une positon d'appui, et dans lequel l'unité de contrôle déduit sur la base de ces informations, une valeur dite « valeur de contrôle » représentative de la dimension d'un défaut local de planéité du sol compensé par ledit pied (100), ladite unité de contrôle étant configurée pour piloter l'actionneur (40) pour entraîner les pieds en position de retrait et transmettre un signal d'alerte au dispositif mobile (20), si la valeur de contrôle n'est pas sensiblement identique à la valeur mesurée.

12. Système selon la revendication 1, dans lequel chaque pied (100) comprend un capteur d'efforts relié à l'unité de contrôle et déterminant le poids supporté par chacun desdits pieds (100) lorsqu'ils sont en position d'appui, l'unité de contrôle étant configurée de sorte à émettre un signal d'alerte lorsque le poids supporté par un pied (100) est inférieur à une valeur cible.

13. Dispositif mobile (20) **caractérisé en ce qu'**il comprend un châssis auquel est lié un système d'immobilisation (10) selon l'une des revendications 1 à 12, le châssis étant supporté à distance du sol par au moins trois roues.

## Patentansprüche

1. System (10) zur Immobilisierung einer mobilen Vorrichtung (20), umfassend:
- mindestens drei Füße (100), die in jeweiligen Führungen (110) gleitend beweglich sind, wobei die Führungen (110) dazu bestimmt sind, an einem Rahmen der mobilen Vorrichtung (20) befestigt zu sein,
- einen Gestängemechanismus (30), der die Füße (100) miteinander verbindet und dazu bestimmt ist, am Rahmen der mobilen Vorrichtung (20) befestigt zu sein,
- einen Aktuator (40), der den Gestängemechanismus (30) beanspruchen kann, um die Füße (100) zwischen einer am Boden aufliegenden Position, in der das Immobilisierungssystem (10) die mobile Vorrichtung (20) immobilisieren kann, und einer zurückgezogenen Position, in der das Immobilisierungssystem (10) die Beweglichkeit der mobilen Vorrichtung (20) freigeben kann, gleitend zu bewegen, **dadurch gekennzeichnet, dass** das Immobilisierungssystem mindestens einen Sensor umfasst, der dazu konfiguriert ist, die Position der Füße (100) zu kennen, wobei der Sensor bzw. die Sensoren mit einer Steuereinheit verbunden sind, die dazu konfiguriert ist, den Aktuator (40) in Abhängigkeit von dieser Information zu steuern.

2. System nach Anspruch 1, umfassend mindestens ein elastisches Organ (140), das vorgespannt ist, wenn sich die Füße (100) in der aufliegenden Position befinden, wobei das mindestens eine elastische Organ so bemessen ist, dass es einen vorbestimmten Bruchteil des Gesamtgewichts der mobilen Vorrichtung (20) trägt, wenn es vorgespannt ist.

3. System nach einem der Ansprüche 1 bis 2, wobei der Gestängemechanismus (30) mindestens drei Sätze von gelenkig miteinander verbundenen Pleuelstangen aufweist, wobei jeder Pleuelstangensatz (33) dazu konfiguriert ist, einen Fuß (100) mit dem Rahmen der mobilen Vorrichtung (20) zu verbinden, wobei der Gestängemechanismus (30) ferner mindestens eine Stange (31) aufweist, die starr mit mindestens einer Querstrebe (32) verbunden ist, wobei die Stange (31) und die Querstrebe (32) die Pleuelstangensätze und den Aktuator (40) verbinden, wobei eine Beanspruchung des Aktuators (40) die Drehung der Pleuelstangen jedes Pleuelstangensatzes (33) relativ zueinander und das Gleiten der Füße (100) in den Führungen (110) bewirkt.

4. System nach Anspruch 3, wobei jedes der jeweiligen Enden der Stange (31) und der Querstrebe (32) durch eine Schwenkverbindung, deren Drehachse koaxial zur Drehachse der Pleuelstangen des Pleuelstangensatzes (33) relativ zueinander ist, mit einem Pleuelstangensatz (33) verbunden ist.

5. System nach einem der Ansprüche 1 bis 4, wobei der Aktuator (40) ein Elektrozylinder ist.

6. System nach einem der Ansprüche 1 bis 5, umfassend ein Organ (36) zum Entkoppeln des Aktuators (40), das dazu geeignet ist:
- einen Kopplungszustand einzunehmen, in dem er eine mechanische Verbindung zwischen dem Rahmen der mobilen Vorrichtung (20) und dem Gestängemechanismus (30) über den Aktuator (40) gewährleistet, wobei der Aktuator (40) mechanische Kräfte auf den Gestängemechanismus (30) ausüben kann, und
- einen Entkopplungszustand einzunehmen, in dem er die mechanische Verbindung unterbricht, wobei keine mechanische Kraft durch den Aktuator (40) auf den Gestängemechanismus (30) übertragen werden kann.

7. System nach Anspruch 6, umfassend ein elastisches Rückstellorgan (50), das den Gestängemechanismus (30) vorspannt, um die Füße (100) in ihre zurückgezogene Position zu bringen.

8. System nach einem der Ansprüche 1 bis 7, wobei die Füße (100) einen Aufhängungsteil (120) und einen Auflageteil (130) aufweisen, die in Gleitbeziehung zueinander stehen, wobei der Aufhängungs- und der Auflageteil (120, 130) durch ein elastisches Organ (140) in einen Abstand zueinander vorgespannt werden.

9. System nach Anspruch 8, wobei jeder Fuß (100) mindestens einen Endanschlag für das Gleiten des Aufhängungs- und des Auflageteils (120, 130) zueinander umfasst, der durch einen Stift ausgebildet ist, der an einem des Aufhängungs- oder Auflageteils (120, 130) befestigt ist und durch eine in dem anderen des Aufhängungs- oder Auflageteils (120, 130) ausgebildete Öffnung greift.

10. System nach Anspruch 1, wobei jeder Fuß (100) ein Organ zur Messung lokaler Bodenunebenheiten umfasst, das das Vorhandensein einer lokalen Bodenunebenheiten gegenüber dem Fuß (100) und die Größe dieser lokalen Unebenheit feststellt, wobei das Messorgan dazu konfiguriert ist, Folgendes an die Steuereinheit zu übermitteln:
- einen Sollwert, der die Ansteuerung des Aktuators (40) erlaubt, wenn der Wert der Größe der lokalen Unebenheit, der als "Messwert" bezeichnet wird, innerhalb eines vordefinierten Toleranzintervalls liegt, und
- einen Sollwert, der die Ansteuerung des Aktuators (40) verbietet, wenn der Messwert außerhalb des vordefinierten Toleranzintervalls liegt.

11. System nach Anspruch 10, wobei jeder Fuß (100) ein Sicherheitsorgan (150) umfasst, das der Steuereinheit Informationen übermittelt, die für einen Verschiebungswert des Fußes (100) repräsentativ sind, wenn die Füße zwischen einer zurückgezogenen Position und einer aufliegenden Position gleiten, und wobei die Steuereinheit auf der Grundlage dieser Informationen einen Wert ableitet, der als "Kontrollwert" bezeichnet wird und für die Größe einer lokalen Bodenunebenheiten, die durch den Fuß (100) ausgeglichen wird, repräsentativ ist, wobei die Steuereinheit dazu konfiguriert ist, den Aktuator (40) zu steuern, um die Füße in die zurückgezogene Position zu bewegen, und ein Warnsignal an die mobile Vorrichtung (20) auszugeben, wenn der Kontrollwert nicht im Wesentlichen mit dem Messwert identisch ist.

12. System nach Anspruch 1, wobei jeder Fuß (100) einen Kraftsensor umfasst, der mit der Steuereinheit verbunden ist und das Gewicht bestimmt, das von jedem der Füße (100) getragen wird, wenn sie sich in der aufliegenden Position befinden, wobei die Steuereinheit dazu konfiguriert ist, ein Warnsignal auszugeben, wenn das von einem Fuß (100) getragene Gewicht unter einem Zielwert liegt.

13. Mobile Vorrichtung (20), **dadurch gekennzeichnet, dass** sie einen Rahmen umfasst, mit dem ein Immobilisierungssystem (10) nach einem der Ansprüche 1 bis 12 verbunden ist, wobei der Rahmen durch mindestens drei Räder in einem Abstand zum Boden getragen wird.

## Claims

1. Immobilization system (10) of a mobile device (20), comprising:
- at least three feet (100) that are able to slide in respective guides (110), said guides (110) being intended to be fixed to a chassis of the mobile device (20),
- a linkage mechanism (30) connecting the feet (100) to one another and being intended to be fixed to the chassis of the mobile device (20),
- an actuator (40) that is able to act on the linkage mechanism (30) so as to slide the feet (100) between a position bearing against the ground, in which the immobilization system (10) is able to immobilize the mobile device (20), and a retracted position, in which the immobilization system (10) is able to free the mobility of the mobile device (20),
**characterized in that** the immobilization system comprises at least one sensor configured to determine the position of the feet (100), said one or more sensors being connected to a control unit configured so as to control the actuator (40) as a function of this information.

2. System according to Claim 1, comprising at least one elastic member (140) that is acted on when the feet (100) are in the bearing position, said at least one elastic member being sized so as to support a predetermined fraction of the total weight of the mobile device (20) when it is acted on.

3. System according to either of Claims 1 and 2, in which the linkage mechanism (30) includes at least three sets of links articulated to one another, each set of links (33) being configured to connect a foot (100) with the chassis of the mobile device (20), the linkage mechanism (30) further includes at least one bar (31) rigidly connected to at least one crossmember (32), said bar (31) and said crossmember (32) connecting the sets of links and the actuator (40), action of the actuator (40) causing rotation of the links of each set of links (33) relative to one another and sliding of the feet (100) in the guides (110).

4. System according to Claim 3, in which each of the respective ends of the bar (31) and of the crossmember (32) is connected to a set of links (33) by a pivot connection of which the axis of rotation is coaxial with the axis of rotation of the links of said set of links (33) relative to one another.

5. System according to one of Claims 1 to 4, in which the actuator (40) is an electric cylinder.

6. System according to one of Claims 1 to 5, comprising a disengagement member (36) of the actuator (40) that is adapted to occupy:
- a coupling state in which it provides a mechanical connection between the chassis of the mobile device (20) and the linkage mechanism (30) via the actuator (40), said actuator (40) being able to apply mechanical forces to the linkage mechanism (30), and
- a disengaged state in which it breaks said mechanical connection, no mechanical force being able to be transmitted by the actuator (40) to the linkage mechanism (30) .

7. System according to Claim 6, comprising an elastic return member (50) acting on the linkage mechanism (30) so as to drive the feet (100) into their retracted position.

8. System according to one of Claims 1 to 7, in which the feet (100) include a suspended part (120) and a bearing part (130) that are in sliding relationship with one another, said suspended and bearing parts (120, 130) being urged away from one another by an elastic member (140) .

9. System according to Claim 8, in which each foot (100) comprises at least one end of travel abutment for the sliding of the suspended and bearing parts (120, 130) relative to one another, formed by a pin fixed to one of said suspended or bearing parts (120, 130) engaged through an opening made in the other suspended or bearing part (120, 130).

10. System according to Claim 1, in which each foot (100) comprises a member for measuring local defects in the flatness of the ground, determining if there exists a local flatness defect of the ground facing said foot (100) and the size of this local defect, said measuring member being configured to transmit to the control unit:
- a setpoint authorizing control of the actuator (40) when the value of the size of the local defect, termed the "measured value", is within a predefined tolerance range, and
- a setpoint prohibiting control of the actuator (40) when the measured value is outside the predefined tolerance range.

11. System according to Claim 10, in which each foot (100) comprises a safety member (150) that communicates to the control unit information representative of a value of movement of the foot (100) when the feet slide between a retracted position and a bearing position, and in which the control unit deduces, on the basis of this information, a value termed the "control value" that is representative of the size of a local flatness defect of the ground compensated for by said foot (100), said control unit being configured to control the actuator (40) to drive the feet into the retracted position and to transmit an alert signal to the mobile device (20) if the control value is not substantially identical to the measured value.

12. System according to Claim 1, in which each foot (100) comprises a force sensor connected to the control unit and determining the weight supported by each of said feet (100) when they are in the bearing position, the control unit being configured so as to emit an alert signal when the weight supported by a foot (100) is below a target value.

13. Mobile device (20), **characterized in that** it comprises a chassis to which is connected an immobilization system (10) according to one of Claims 1 to 12, the chassis being supported at a distance from the ground by at least three wheels.
